# FASCICULE DE BREVET EUROPEEN

(11) **EP 1 798 272 B1**
(45) Date de publication et mention de la délivrance du brevet: **14.12.2011**
(21) Numéro de dépôt: 06291705.9
(22) Date de dépôt: 03.11.2006
(51) Int. Cl.: C09K 19/38, C09B 69/10, G02B 5/30

(54) **Procédé de fabrication d'un article optique et article ainsi obtenu**
Verfahren zur Herstellung eines optischen Artikels und so erhaltener Artikel
Manufacturing process for an optical article and article so obtained

(30) Priorité: 02.12.2005 FR 0512277
(43) Date de publication de la demande: 20.06.2007
(73) Titulaire: ESSILOR INTERNATIONAL (COMPAGNIE GENERALE D'OPTIQUE), 94220 Charenton-le-Pont (FR)
(72) Inventeur: Godeau, Muriel c/o Essilor International, 94220 Charenton Le Pont (FR); Lesartre, Noémie c/o Essilor International, 94220 Charenton Le Pont (FR)
(74) Mandataire: Pöpping, Barbara

(56) Documents cités:
- EP-A- 1 462 485
- EP-A- 1 593 990
- US-A- 5 738 803
- US-A- 5 976 638
- US-A1- 2004 135 962

## Description

L'invention concerne un procédé de fabrication d'un article optique polarisé, en particulier d'une lentille ophtalmique polarisée, comprenant une étape d'imbibition de l'article par un absorbeur UV dans des conditions déterminées. Elle concerne également un article optique polarisé, en particulier susceptible d'être obtenu selon le procédé précédent.

Il est connu d'introduire des substances telles que des colorants ou des absorbeurs UV dans des lentilles optiques par un procédé dit d'imprégnation ou d'imbibition.

Ainsi, la demande WO 02/059054 divulgue un procédé d'imprégnation d'une couche mince, constituée d'une matrice de polymère latex (notamment de polyuréthanne éventuellement réticulé) déposée sur un verre optique. La solution d'imprégnation est appliquée par centrifugation sur la couche mince et renferme un additif tel qu'un colorant. Un tel procédé permet notamment d'obtenir une lentille ophtalmique comprenant un revêtement teinté.

La demande JP11-052101 divulgue un procédé d'imprégnation du substrat d'une lentille par une solution renfermant un absorbeur UV et un colorant destiné à compenser la coloration de la lentille induite par ledit absorbeur UV. Le procédé d'imprégnation est mis en oeuvre à 90°C pendant 15 minutes.

Enfin, la demande JP09-145901 divulgue un procédé d'imprégnation d'un substrat de lentille en plastique, à l'aide de deux solutions successives renfermant, pour la première, un absorbeur UV (destiné à protéger l'oeil et le matériau de la lentille contre les UV) associé à un assistant de coloration et éventuellement à un dispersant, et, pour la seconde, un colorant.

EP 1 593 990 A1 décrit un article ophtalmique polarisée comprenant un substrat et un revêtement tricouche comprenant une première couche de photo-orientation (i.e. photoalignment) à base d'un polyacrylate ou polyimide, une seconde couche de polymères à cristaux liquides comprenant un colorant dichroïque, et une couche de protection.

Les inventions décrites dans les demandes citées précédemment ont permis d'introduire des absorbeurs UV dans des articles optiques, et plus particulièrement dans le substrat constitutif dudit article. Néanmoins elles ne sont pas toujours adaptées pour protéger des colorants sensibles à la photodégradation due aux rayonnements ultraviolets. Parmi les colorants sensibles à de telles réactions ont peut citer les colorants dichroïques ou photochromiques qui contiennent notamment des motifs aromatiques dont certains peuvent être sensibles aux rayonnements UV. De tels colorants dichroïques sont notamment utilisés en combinaison avec des cristaux liquides afin d'apporter une propriété de polarisation de l'objet qui les comprend, tel que par exemple les lentilles ophtalmiques polarisées.

Les lentilles polarisées ont connu un grand développement ces dernières années, dans la mesure où elles améliorent grandement le confort de vision en limitant l'éblouissement provoqué par les reflets provenant de surface réfléchissante telle que l'eau notamment. Il en résulte une meilleure perception des contrastes et de la profondeur.

En particulier, il est connu d'utiliser un revêtement bicouche à fonction polarisante contenant une couche de polymère à cristaux liquides (LCP) renfermant des colorants dichroïques, et une couche de "photopolymère linéaire (LPP)" pour conférer au substrat le comprenant une fonction polarisante. De tels revêtements sont notamment utilisés dans des écrans d'affichage, mais peuvent également être utilisés avec des articles optiques (US 5 602 661, US 2005/0151926; EP 1 593 990). Précisément, la couche de LPP est constituée d'un matériau qui, une fois polymérisé sous l'effet des UV polarisés linéairement, va se structurer et permettre l'organisation des molécules de cristaux liquides et l'alignement des colorants dichroïques suivant une direction particulière.

L'utilisation d'un tel revêtement bicouche sur un article optique, tel qu'une lentille ophtalmique, permet de conférer à ladite lentille des propriétés polarisantes particulièrement performantes. Il est ainsi possible d'obtenir des lentilles ophtalmiques présentant un facteur de transmission relatif dans le visible (Tᵥ) compris entre 80% et 6%, associé à un rapport de contraste qui est supérieur à celui généralement observé pour des lentilles polarisantes obtenues par collage ou laminage d'un film polarisant, et qui atteint couramment des valeurs supérieures à 100. Le revêtement de type photopolymère linéaire (LPP) et de type polymères cristaux liquides (LCP) peut être déposé par centrifugation (spin) sur un substrat organique. Ce procédé s'intègre pleinement dans les chaînes de production et permet notamment l'obtention de lentille ophtalmique dont la lentille est constituée par tout type de substrat. Ce procédé est particulièrement bien adapté pour la réalisation de lentille comprenant un substrat à haut indice de réfraction (n = 1,6 - 1,67 ou 1,74), car ce procédé n'altère pas l'épaisseur centre de la lentille, optimisation particulièrement recherchée pour les matériaux à haut indice.

Comme indiqué précédemment, les colorants dichroïques présents dans ces revêtements polarisants bicouches sont sensibles aux UV, ce qui se traduit généralement par une perte des performances polarisantes, en particulier par une chute du rapport de contraste (CR), une augmentation de la transmission (Tv%) et un changement de teinte (ΔE), ce qui n'est pas acceptable pour une lentille polarisante qui doit être utilisable dans des conditions de fort ensoleillement.

L'intégration directe d'absorbeurs UV au sein de la solution (LCP) (mélanges de cristaux liquides, de colorants dichroïques et de solvant(s)) avant polymérisation de la couche risque d'empêcher l'organisation des cristaux liquides et par conséquent conduire à un mauvais alignement des colorants dichroïques, ceci conduisant à de faible performances polarisantes. La protection efficace des colorants dichroïques nécessiterait des proportions d'absorbeurs UV pour lesquelles la réalisation de ce risque deviendrait très probable.

Cette solution n'est donc pas compatible avec les pré requis.
Il est donc nécessaire de disposer d'un procédé permettant l'introduction d'absorbeurs UV dans un article optique polarisé, qui ne présente pas les inconvénients mentionnés ci-dessus, et plus particulièrement qui n'entraîne pas de modification des propriétés polarisantes du système et qui n'engendre pas de problème d'adhérence avec d'éventuels autres revêtements que l'article polarisé pourrait contenir.

Or, la Demanderesse a découvert que l'imbibition de l'article optique dans des conditions déterminées permettait de satisfaire ce besoin.

La présente invention a donc pour objet un procédé de fabrication d'un article optique polarisé, en particulier d'une lentille ophtalmique polarisée, comprenant au moins les étapes successives consistant respectivement :
- à appliquer, sur un substrat constitutif de l'article optique, un revêtement polymérisé comprenant au moins un colorant sensible à la photodégradation, et
- à introduire un absorbeur UV dans ledit revêtement,
caractérisé en ce que
(a) le revêtement polymérisé comprenant au moins un colorant sensible à la photodégradation est un revêtement bicouche comprenant une première couche de photopolymères linéaires (LPP) et une seconde couche de polymères à cristaux liquides (LCP) comprenant au moins un colorant dichroïque, et
(b) l'absorbeur UV est introduit par imbibition au sein dudit revêtement, ladite imbibition comprenant les étapes suivantes:
   (b1) immersion de l'article dans une solution aqueuse comprenant l'absorbeur UV et au moins un agent dispersant, pendant une durée comprise entre 10 secondes et 2 minutes, ladite solution étant maintenue à une température comprise entre 80°C et 99°C, puis
   (b2) rinçage de l'article par un alcool inférieur.

La présente invention a également pour objet un article optique polarisé susceptible d'être obtenu selon le procédé défini précédemment.

Elle a encore pour objet un article optique polarisé, en particulier une lentille ophtalmique polarisée, comprenant :
- un substrat,
- un revêtement bicouche comprenant une première couche de photopolymères linéaires (LPP) et une seconde couche de polymères à cristaux liquides (LCP) renfermant au moins un colorant dichroïque, et
- un absorbeur UV présent au moins partiellement dans ledit revêtement bicouche.

Dans la présente demande, les définitions de certains termes doivent être comprises de la façon suivante :
- par article optique on entend les lentilles optiques d'instrumentation et de visée, les visières et les lentilles ophtalmiques,
- par lentille ophtalmique, on entend les lentilles s'adaptant notamment à une monture de lunette, ayant pour fonction de protéger l'oeil et/ou de corriger la vue, ces lentilles étant choisies parmi les lentilles afocales, unifocales, bifocales, trifocales et progressives,
- par substrat, on entend le matériau transparent constitutif de base de la lentille optique et plus particulièrement de la lentille ophtalmique. Ce matériau sert de support à l'empilement d'un ou plusieurs revêtements comprenant notamment les revêtements polarisants,
- par revêtement, on entend toute couche, film ou vernis pouvant être en contact avec le substrat, et/ou avec un autre revêtement déposé sur celui-ci, et pouvant notamment être choisi parmi les revêtements teintés, anti-reflets, antisalissures, anti-chocs, anti-rayures, polarisants et antistatiques.

En outre, par « alcool inférieur », on entend un mono-alcool renfermant de 2 à 4 atomes de carbone tel que l'éthanol ou l'isopropanol et en particulier l'isopropanol.
Le substrat de l'article optique, en particulier de la lentille ophtalmique, peut être de type minéral ou organique. A titre indicatif mais non limitatif, on peut citer comme substrat organique pouvant être utilisé dans le cadre de l'invention les substrats classiquement utilisés en optique et en ophtalmie. Par exemple, sont adaptés les substrats du type polycarbonate; polyamide ; polyimides ; polysulfones ; copolymères de poly(éthylènetérephtalate) et polycarbonate; polyoléfines, notamment polynorbornènes ; polymères et copolymères de diéthylèneglycol bis(allylcarbonate); polymères et copolymères (méth)acryliques notamment polymères et copolymères (méth)acryliques dérivés de bisphenol-A; polymères et copolymères thio(méth)acryliques ; polymères et copolymères uréthane et thiouréthane ; polymères et copolymères époxy et polymères et copolymères épisulfide. D'une façon avantageuse, l'invention est particulièrement bien adaptée pour les lentilles ophtalmiques dont le substrat est un poly(thio)uréthane.

La première étape du procédé selon l'invention comprend l'application du revêtement bicouche. Ce revêtement comprend une couche de photopolymère(s) ou polymère(s) photo-orientable(s) déposée sur le substrat et sur laquelle est déposée la couche de polymère(s) à cristaux liquides.

L'application de ce revêtement peut être effectuée suivant un procédé comprenant les étapes générales successives consistant :
1- à préparer une solution d'au moins un photo-polymère linéaire,
2- à appliquer ladite solution sur le substrat, pour former une couche de photo-alignement,
3- à appliquer un rayonnement UV, en présence d'un polariseur, à ladite couche de photo-alignement, de manière à la structurer,
4- à préparer une solution de cristaux liquides contenant au moins un colorant dichroïque,
5- à appliquer ladite solution sur ladite couche de photo-alignement structurée,
6- à réticuler la couche de cristaux liquides à l'aide d'une source de lumière UV.

Les solutions de cristaux liquides et/ou de photo-polymère linéaire peuvent être appliquées par centrifugation (spin coating), trempage ou pulvérisation. L'application par centrifugation est préférée dans la présente invention.

Un revêtement bicouche de ce type est notamment décrit dans la demande EP-1 593 990.

La couche de photo-polymère linéaire peut ainsi être constituée de polymères acryliques ou méthacryliques, de dendrimères ou de polyimides, possédant des groupes réactifs du type dérivés d'acide cinnamique, chalcones ou coumarines. Ces matériaux peuvent être véhiculés dans un solvant tel que l'acétone, le dichlorométhane, ou dans un mélange de solvant tel que méthyléthylcétone/cyclopentanone. L'étape de photo-polymérisation peut être réalisée après une étape éventuelle de séchage de la solution, et être réalisée par exposition à la lumière UV polarisée.

Les polymères à cristaux liquides et les colorants dichroïques peuvent être véhiculés dans un solvant tel que cyclohexanone ou dans des mélanges tels que anisole/acétone, anisole/acétate d'éthyle ou anisole/cyclopentanone. Le revêtement constitué du mélange de cristaux liquides et de colorants dichroïques peut être soumis (éventuellement après une étape de séchage) à une irradiation UV afin de permettre sa polymérisation.

Les colorants dichroïques peuvent ou non être polymérisables, de préférence polymérisables. Les colorants dichroïques préférés ont un rapport dichroïque élevé, un coefficient d'extinction élevé et une bonne solubilité. Il peut s'agir de colorants azoïques, perylènes, anthraquinones ou phénoxazines. Les colorants azoïques et anthraquinones sont préférés car particulièrement bien compatibles avec les polymères à cristaux liquides utilisés dans le cadre de l'invention.

La Demanderesse a démontré que ce système polarisant, bien qu'ayant une faible température de transition vitreuse une fois réticulé (Tg ≈ 20°C), pouvait être imbibé par une solution d'absorbeurs UV à une température supérieure à 80°C sans affecter notablement l'orientation des colorants dichroïques. Ceci est aisément mis en évidence par des mesures de contraste ratio avant et après l'étape d'imbibition. Il est ainsi possible, avec ce système, d'utiliser des températures d'imbibition élevées, de l'ordre de 95°C, qui permettent une diffusion rapide de l'absorbeur UV dans le système polarisant et donc l'obtention d'une coupure UV proche de 380 nm dès 30 secondes d'imbibition. En outre, compte tenu de son caractère réticulé, le système polarisant précité empêche la désorption de l'absorbeur UV lors du traitement ultérieur de l'article optique, par exemple lors de l'application d'un revêtement anti-abrasion bicouche en présence de soude et d'alcool, et confère ainsi une bonne tenue chimique à l'article.
Le revêtement ainsi obtenu a généralement une épaisseur de 1 à 20 µm (micromètre), et de préférence de 3 à 8 µm.
La seconde étape du procédé selon l'invention comprend l'imprégnation d'au moins un absorbeur UV dans l'article optique polarisé.

Des exemples non limitatifs d'absorbeurs UV utilisés dans le procédé selon l'invention sont choisis parmi les benzotriazoles, en particulier l'hydroxyphénylbenzotriazole ; les triazines telles que l'hydroxyphényl-S-triazine ; les hydroxy-benzophénones ; et les anilides oxaliques. L'absorbeur UV est préférentiellement choisi parmi les absorbeurs de la famille des benzophénones et des benzotriazoles. Ces absorbeurs sont particulièrement adaptés pour absorber les UV aux longueurs d'onde engendrant le plus de photodégradation des colorants sensibles aux UV, dans la plage intéressante dans le cadre de l'invention.

Les absorbeurs UV préférentiellement choisis sont le CYASORB^{®} UV 24, le CYASORB^{®} UV-1164L, le CYASORB^{®} UV-1164 A, le CYASORB^{®} UV-2337, le CYASORB^{®} UV-531, le CYASORB^{®} UV-5411 et le CYASORB^{®} UV-9, tous disponibles dans le commerce auprès de la société CYTEC.
D'autres absorbeurs UV utilisables dans la présente invention sont l'UVINUL^{®} 300, l'UVINUL^{®} 3008, l'UVINUL^{®} 3040, l'UVINUL^{®} 3048, l'UVINUL^{®} 3049 et l'UVINUL^{®} 3050, disponibles auprès de la société BASF.
D'autres exemples encore d'absorbeurs UV sont le TINUVIN^{®} 1130, le TINUVIN^{®} 292, le TINUVIN^{®} 5151, le TINUVIN^{®} 99-2, le TINUVIN^{®} 384-2, le TINUVIN^{®} 3050, le TINUVIN^{®} 5055 et le TINUVIN^{®} 5060 disponibles auprès de la société CIBA.
D'autres exemples encore d'absorbeurs UV sont le SANDWOR^{®} 3041, le le SANDUVOR^{®} 3051, le SANDUVOR^{®} 3063, le SANDUVOR^{®} 3070 et le SANDUVOR^{®} 3225 disponibles auprès de la société CLARIANT.
Le CYASORB^{®} UV 24 est particulièrement préféré dans la présente invention ; il s'agit de la 2,2'-dihydroxy-4-méthoxybenzophenone.

Au sein de la solution aqueuse d'imprégnation, un agent dispersant tel que l'acide dodécylbenzènesulfonique est introduit. Cet agent dispersant permet d'éviter la formation d'agrégat de l'absorbeur UV au sein de ladite solution d'imprégnation.

La quantité d'absorbeur UV au sein de la solution d'imprégnation doit être suffisamment importante pour permettre une imprégnation rapide du revêtement polarisant présent sur l'article optique, et suffisamment faible pour ne pas conduire à la formation d'agrégat au sein de la solution d'imprégnation. L'imprégnation rapide de l'article optique est une condition importante. En effet si le temps d'immersion de l'article optique est trop long (supérieur à 2 minutes) on constate un décollement du revêtement de la surface du substrat constitutif de l'article optique.

Le procédé selon l'invention permet d'introduire l'absorbeur UV au moins partiellement dans le revêtement bicouche polarisant.

Pour ce faire, la durée d'immersion de l'article optique dans le bain d'immersion est comprise entre 10 secondes et 2 minutes. Il s'agit d'une durée optimale pour obtenir un article optique présentant une résistance à la photodégradation optimisée, tout en conservant de bonnes propriétés cosmétiques, un rapport de contraste similaire à celui obtenu pour un article polarisé n'ayant pas subi le procédé d'imprégnation, ainsi que de bonnes propriétés d'adhésion sur l'article optique tant de ladite bicouche que des éventuels revêtements pouvant être déposés sur cette bicouche. Une durée d'immersion d'environ 30 secondes est particulièrement préférée.

En outre, la température du bain d'immersion, qui va de 80°C à 99°C, est de préférence comprise entre 90°C et 96°C, plus préférentiellement égale à 94°C. Le bain d'immersion est une solution aqueuse.

En plus du revêtement polarisant précité, l'article optique fabriqué selon l'invention pourra comprendre un ou plusieurs revêtements tels que par exemple : un revêtement anti-abrasion, par exemple de type bicouche, éventuellement appliqué sur une couche de primaire ; un revêtement teinté ; un revêtement formant barrière contre l'oxygène ; un revêtement anti-reflet, par exemple à quatre couches ; un revêtement anti-salissures hydrophobe et oléophobe ; ou un revêtement antistatique. Un ou plusieurs de ces différents revêtements peuvent être déposés directement sur le substrat avant dépôt du revêtement polarisant bicouche ou bien sur ledit revêtement bicouche.

La couche de primaire, lorsqu'elle est utilisée, améliore la résistance au choc de l'article sur laquelle elle est déposée et également l'ancrage de la couche résistant à l'abrasion. La couche de primaire peut être toute couche de primaire classiquement utilisée dans le domaine optique et en particulier ophtalmique. Typiquement, ces primaires, en particulier les primaires anti-choc, sont des revêtements à base de polymères (méth)acryliques, de polyuréthanes, de polyesters, ou encore à base de copolymères époxy/(méth)acrylate.

Le revêtement anti-abrasion peut être tout revêtement anti-abrasion classiquement utilisé dans le domaine de l'optique et en particulier de l'optique ophtalmique. Par définition, un revêtement anti-abrasion est un revêtement qui améliore la résistance à l'abrasion de l'article d'optique fini comparé au même article ne comportant pas le revêtement anti-abrasion.
Les revêtements anti-abrasion préférés sont ceux obtenus par durcissement d'une composition incluant un ou plusieurs époxyalcoxysilanes ou un hydrolysat de ceux-ci, de la silice et un catalyseur de durcissement. Des exemples de telles compositions sont décrits dans la demande internationale WO 94/10230 et les brevets US 4 211 823, US 5 015 523, ainsi que dans le brevet européen EP 614 957 et en particulier dans l'Exemple 3 de ce brevet. On peut ainsi utiliser un revêtement anti-abrasion fabriqué à partir de composés commercialisés par la société ULTRA OPTICS sous la référence UV-NV.

Le revêtement formant barrière à l'oxygène comprend généralement soit une couche d'oxyde métallique dense, soit une couche d'oxyde métallique non dense, soit un système comprenant un empilement de 1 à 4 couches d'oxydes métalliques différents.

Ce revêtement peut être constitué d'un film mono- ou multicouche, de matériaux tels que SiO, SiO₂, Si₃N₄, TiO₂, ZrO₂, Al₂O₃, MgF₂ ou Ta₂O₅, ou leurs mélanges. D'une façon avantageuse, le système monocouche comprend du dioxyde de silicium, et présente une épaisseur comprise entre 10 et 100 nm. L'empilement comprend avantageusement une alternance d'au moins deux monocouches d'oxydes différents ces derniers étant avantageusement choisis parmi les oxydes de silicium, de titane, et de zirconium. L'empilement présente avantageusement une épaisseur comprise entre 50 nm et 300 nm, préférentiellement entre 100 et 200 nm.
Ce revêtement formant barrière à l'oxygène est appliqué par des méthodes bien connues de l'homme du métier, et généralement par dépôt sous vide selon l'une des techniques suivantes :
- par évaporation, éventuellement assistée par faisceau ionique;
- par pulvérisation par faisceau d'ions;
- par pulvérisation cathodique;
- par dépôt chimique en phase vapeur assistée par plasma.
   L'invention sera maintenant illustrée par l'exemple non limitatif suivant.

### EXEMPLE : préparation d'une lentille ophtalmique polarisée

### 1. Application du revêtement polarisé

Un revêtement polarisant est appliqué sur une lentille haut indice dont le substrat est un polythiouréthane. Le polythiol préféré est le 1,2-bis(2'-mercaptoéthylthio)-3-mercaptopropane (MDO). L'isocyanate préféré est le m-xylènediisocyanate.
Le mode opératoire est tel que décrit dans la demande de brevet EP 1 593 990.

### A. Préparation de la couche LPP et dépôt

La lentille est lavée dans une solution de soude à 5% dans un bain d'ultrasons à 55°C. Elle est ensuite trempée dans de l'eau puis dans de l'eau désionisée (éventuellement dans de l'isopropanol). Une solution à 2% en poids comprenant un polymère acrylique présentant des fonctions acides cinnamiques est préparée dans un mélange de méthyléthylcétone et de cyclopentanone (10:1). Cette solution est déposée par centrifugation (spin) sur le substrat de la lentille. La vitesse de rotation est de 500 rpm pendant 3 secondes, puis de 2500 rpm pendant 20 secondes. Le solvant est évaporé par chauffage dans une étuve à 100°C pendant 20 minutes. Cette couche est irradiée sous un polariseur UV à une dose de 100 mJ/cm².

### B. Préparation de la couche LCP et dépôt

Une solution contenant des molécules de cristaux liquides et des colorants dichroïques sensibles à la dégradation par les ultraviolets est préparée dans la cyclohexanone. La partie solide contenue dans cette solution est typiquement de 40% en poids. La quantité de colorant dichroïque est d'environ 10% en poids. Cette solution est déposée par centrifugation sur la couche de LPP (vitesse de rotation = 500 rpm pendant 25 secondes). La couche de LCP est séchée pendant 10 minutes à une température de 87°C. Après évaporation des solvants, cette couche est réticulée sous atmosphère d'azote par irradiation en présence d'une source UV à une dose de 30 J/cm².

### 2. Imbibition de la lentille polarisée

### A. Préparation du bain d'imbibition

1500 ml d'eau distillée sont chauffés à 94°C, sous agitation, dans un bécher en verre placé sur un agitateur magnétique. Quand la température atteint 90°C, 3 g d'agent dispersant (l'acide dodécylbenzènesulfonique) sont ajoutés et dispersés dans l'eau. Puis 13,05 g d'absorbeur UV CYASORB UV-24 sont ajoutés à la solution contenant l'agent dispersant. Le mélange est ensuite agité et chauffé pendant environ 2 heures. La température du bain est alors de 94°C.

### B. Imbibition de la lentille

La lentille est plongée 30 secondes dans le bain préparé comme décrit ci-dessus, avant d'être rincée dans un bain d'isopropanol afin d'éliminer les résidus d'acide et d'absorbeur UV présents en surface de la lentille.

### C. Mesure de la coupure UV.

La coupure UV (Longueur d'onde pour laquelle la transmission devient inférieure à 1%) du revêtement polarisé seul est égale à 380 nm. Cette coupure UV est mesurée à l'aide d'un spectromètre sur un revêtement polarisé déposé sur un biplan minéral.

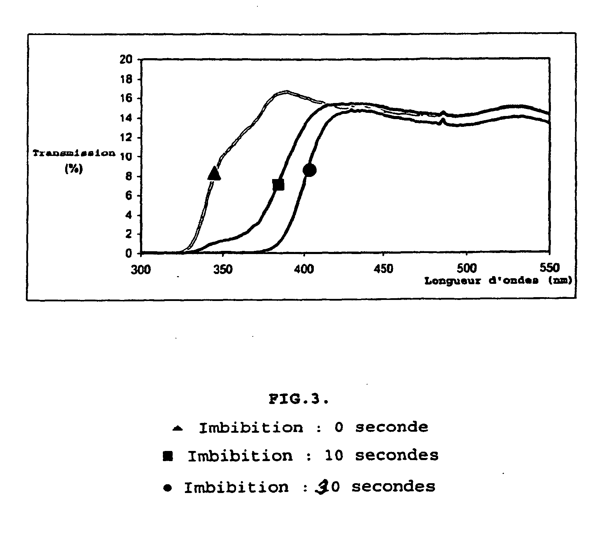

La figure 3 présente les coupures UV obtenues pour des temps d'imbibition nul, de 10 secondes et 30 secondes. La coupure UV, initialement de 330 nm devient égale à 345 nm après 10 secondes d'imbibition puis égale à 385 nm après 30 secondes.

### 3. Application de revêtements anti-abrasion et anti-reflet

Un revêtement bicouches anti-abrasion est appliqué selon les étapes suivantes:
- premièrement une couche de primaire latex est obtenue selon le protocole décrit dans l'exemple 1 du brevet US 5,316,791 en utilisant comme substrat une dispersion aqueuse de polyuréthane commercialisée par la société Baxenden sous la référence W-240. Cette première couche est déposée par trempage sur la lentille portant le revêtement polarisant décrit dans l'étape 1 et le revêtement de protection contre la photodégradation tel que décrit dans l'étape 2 et est chauffée à 87°C pendant 4 minutes; l'épaisseur de cette couche est de 1 µm ;
- sur cette première couche est déposée une couche obtenue selon le protocole décrit dans l'exemple 3 du brevet EP 0 614 957. Cette deuxième couche comprend, par rapport au poids total de la composition, 22% de glycidoxypropylméthyl diméthoxysilane, 62% de silice colloïdale, représentant 30% de la partie solide dans le méthanol, et 0,70% d'aluminium acétylacétonate (un catalyseur), la différence jusqu'à 100 % en poids consistant principalement en eau. Cette couche est déposée par trempage de la lentille dans ladite solution puis est polymérisée pendant 3 heures à 100°C. L'épaisseur de cette couche est de 3,5 µm.

Un revêtement anti-reflet traditionnel à quatre couches, comprenant une alternance de couches d'oxydes de zirconium et de silicium est ensuite appliqué jusqu'à atteindre une épaisseur totale d'empilement de 200 nm.

Les différentes couches sont réalisées dans une machine BAK, en rotation sous un vide poussé de 2 x 10⁻⁵.

### 4. Test au vieillissement aux UV - Suntest

On a comparé par des essais de vieillissement accéléré effectués à l'aide d'un Suntest les configurations suivantes :

### Exemple 1 : lentille comprenant un revêtement polarisé bicouches, un revêtement bicouche anti-abrasion et un revêtement anti-reflet à quatre couches

### Exemple 2 : lentille comprenant un revêtement polarisé bicouches imbibé, un revêtement bicouche anti-abrasion et un revêtement anti-reflet à quatre couches

Le principe de ce test est décrit ci-dessous :
Les verres sont placés dans l'équipement Suntest qui produit un éclairement de 60 klux. Ils subissent des cycles successifs de vieillissement solaire de 50 heures. La durée totale d'exposition varie de 50 à 200 heures. A l'issue de chaque cycle d'éclairement, une ou plusieurs caractéristiques optiques du produit sont mesurées pour déterminer une éventuelle évolution. Il s'agit principalement de la transmission visuelle (Tv), du rapport de contraste (CR) et de la détermination des paramètres colorimétriques (L*, a*, b*).
Pour chacune des configurations, on a mesuré la transmission (Tv), le rapport de contraste (CR) et l'écart colorimétrique (ΔE = (ΔL²+Δa²+Δb²)1/2).
Les résultats sont rassemblés dans les Tableaux 1 et 2 suivants :

**Tableau 1 : Lentille polarisée non imbibée**

| **Temps Suntest** | **Tv (%)** | **ΔTv/Tv** | **ΔE** | **CR** |
|---|---|---|---|---|
| **0h** | 16.01 | 0 | 0 | 298 |
| **25h** | 16.91 | 5.6 | 2.0 | / |
| **50h** | 17.81 | 11.2 | 3.7 | 188 |
| **75h** | 17.78 | 11.0 | 4.0 | 127 |
| **100h** | 19.50 | 21.8 | 6.2 | 121 |
| **200h** | 21.09 | 31.7 | 8.7 | 75 |

**Tableau 2 : Lentille polarisée imbibée**

| **Temps Suntest** | **Tv (%)** | **ΔTv/Tv** | **ΔE** | **CR** |
|---|---|---|---|---|
| **0h** | 17.47 | 0 | 0 | 210 |
| **25h** | 17.99 | 2.9 | 1.0 | / |
| **50h** | 17.95 | 2.7 | 1.1 | 156 |
| **75h** | 18.22 | 4.2 | 1.4 | 123 |
| **100h** | 18.96 | 8.4 | 2.3 | 123 |
| **200h** | 18.90 | 8.2 | 3.7 | 84 |

Comme il ressort de ces tableaux, l'imbibition de la lentille entraîne une moindre diminution de l'efficacité de polarisation, mesurée par le rapport de contraste CR après 50h au Suntest. Surtout, le changement de coloration ΔE des lentilles est moindre et la transmission Tv augmente nettement moins.

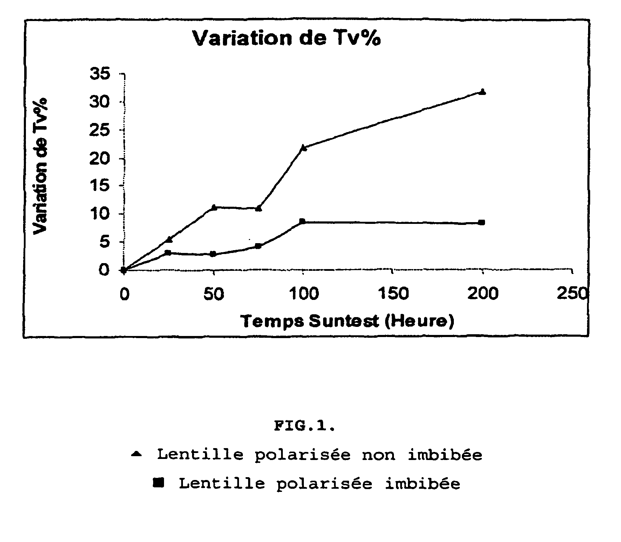

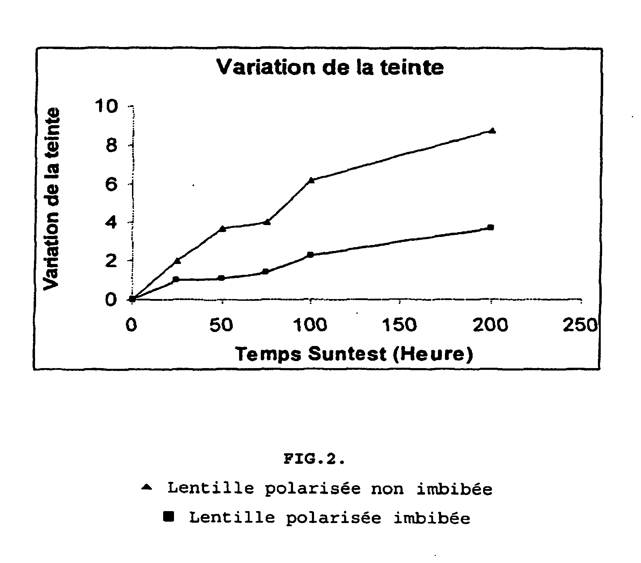

Les figures 1 et 2 illustrent les variations des valeurs de Tv et de la teinte (ΔE).

## Revendications

1. Procédé de fabrication d'un article optique polarisé, en particulier d'une lentille ophtalmique polarisée, comprenant au moins les étapes successives consistant respectivement :
- à appliquer, sur un substrat constitutif de l'article optique, un revêtement polymérisé comprenant au moins un colorant sensible à la photodégradation, et
- à introduire un absorbeur UV dans ledit revêtement, **caractérisé en ce que**
(a) le revêtement polymérisé comprenant au moins un colorant sensible à la photodégradation est un revêtement bicouche comprenant une première couche de photopolymères linéaires (LPP) et une seconde couche de polymères à cristaux liquides (LCP) comprenant au moins un colorant dichroïque, et
(b) l'absorbeur UV est introduit par imbibition au sein dudit revêtement, ladite imbibition comprenant les étapes suivantes:
(b1) immersion de l'article dans une solution aqueuse comprenant l'absorbeur UV et au moins un agent dispersant, pendant une durée comprise entre 10 secondes et 2 minutes, ladite solution étant maintenue à une température comprise entre 80°C et 99°C, puis
(b2) rinçage de l'article par un alcool inférieur.

2. Procédé selon la revendication 1, **caractérisé en ce que** ledit substrat est choisi parmi : les substrats du type polycarbonate; polyamide ; polyimides ; polysulfones ; copolymères de poly(éthylènetérephtalate) et polycarbonate; polyoléfines, notamment polynorbornènes ; polymères et copolymères de diéthylèneglycol bis(allylcarbonate); polymères et copolymères (méth)acryliques notamment polymères et copolymères (méth)acryliques dérivés de bisphenol-A; polymères et copolymères thio(méth)acryliques ; polymères et copolymères uréthane et thiouréthane ; polymères et copolymères époxy et polymères et copolymères épisulfide.

3. Procédé selon la revendication 2 dans lequel le substrat est un poly(thio)uréthane.

4. Procédé selon l'une des revendications 1 à 3, **caractérisé en ce que** l'application du revêtement bicouche est effectuée suivant un procédé comprenant les étapes générales successives consistant :
1- à préparer une solution d'au moins un photopolymère linéaire,
2- à appliquer ladite solution sur le substrat, pour former une couche de photo-alignement,
3- à appliquer un rayonnement UV, en présence d'un polariseur, à ladite couche de photo-alignement, de manière à la structurer,
4- à préparer une solution de cristaux liquides contenant au moins un colorant dichroïque,
5- à appliquer ladite solution sur ladite couche de photo-alignement structurée,
6- à réticuler la couche de cristaux liquides à l'aide d'une source de lumière UV.

5. Procédé selon l'une quelconque des revendications 1 à 4, **caractérisé en ce que** ledit absorbeur UV est choisi parmi : les benzotriazoles, en particulier l'hydroxyphénylbenzotriazole ; les triazines telles que l'hydroxyphényl-S-triazine ; les hydroxy-benzophénones ; et les anilides oxaliques.

6. Procédé selon la revendication 5, **caractérisé en ce que** ledit absorbeur UV est la 2,2'-dihydroxy-4-méthoxybenzophénone.

7. Procédé selon l'une des revendications 1 à 6, **caractérisé en ce que** l'agent dispersant est l'acide dodécylbenzènesulfonique.

8. Procédé selon l'une quelconque des revendications 1 à 7, **caractérisé en ce que** la durée d'immersion de l'article optique dans la solution contenant l'absorbeur UV est d'environ 30 secondes.

9. Procédé selon l'une quelconque des revendications 1 à 8, **caractérisé en ce que** la température du bain d'immersion est comprise entre 90°C et 96°C.

10. Procédé selon la revendication 8, **caractérisé en ce que** la température du bain d'immersion est égale à 94°C.

11. Procédé selon l'une quelconque des revendications 1 à 10, **caractérisé en ce que** l'article optique comprend un ou plusieurs revêtements choisis parmi : un revêtement anti-abrasion, par exemple de type bicouche, éventuellement appliqué sur une couche de primaire ; un revêtement teinté ; un revêtement formant barrière contre l'oxygène ; un revêtement anti-reflet, par exemple à quatre couches ; un revêtement anti-salissures hydrophobe et oléophobe ; et un revêtement antistatique.

12. Article optique susceptible d'être obtenu selon le procédé défini dans l'une quelconque des revendications 1 à 11.

## Claims

1. A method of manufacturing a polarized optical article, in particular a polarized ophthalmic lens, comprising at least the following successive steps of :
applying, to a substrate of the optical article, a polymerized coating comprising at least one dye that is sensitive to photodegradation; and
introducing a UV absorber into said coating;
**characterized by** the fact that
(a) the polymerized coating comprising at least one dye that is sensitive to photodegradation is a bilayer coating comprising a first layer of linear photopolymers (LPP) and a second layer of liquid crystal polymers (LCP) comprising at least one dichroic dye; and
(b) the UV absorber is introduced into said coating by imbibition, said imbibition comprising the following steps:
(b1) immersion of the article in an aqueous solution comprising the UV absorber and at least one dispersing agent, for a period of time of between 10 seconds and 2 minutes, said solution being kept at a temperature of between 80°C and 99°C; then
(b2) rinsing of the article with a lower alcohol.

2. The method according to Claim 1, **characterized by** the fact that said substrate is selected from the group consisting of polycarbonate; polyamide; polyimides; polysulphones; poly(ethylene terephthalate) / polycarbonate copolymers; polyolefins, especially polynorbornenes; diethylene glycol bis(allylcarbonate) polymers and copolymers; (meth)acrylic polymers and copolymers, especially (meth)acrylic polymers derived from bisphenol A; thio(meth)acrylic polymers and copolymers; urethane and thiourethane polymers and copolymers; epoxy polymers and copolymers and episulphide polymers and copolymers.

3. The method according to Claim 2, wherein the substrate is a poly(thio)urethane.

4. The method according to any of claims 1 to 3, **characterized by** the fact that the application of the bilayer coating is carried out according to a method comprising the following successive steps .
1- preparing a solution of at least one linear photopolymer;
2- applying said solution to the substrate, in order to form a photoalignment layer;
3- applying UV radiation, in the presence of a polarizer, to said photoalignment layer, so as to structure it;
4- preparing a liquid crystal solution containing at least one dichroic dye;
5- applying said solution to said structured photoalignment layer;
6- crosslinking the liquid crystal layer using a UV light source.

5. The method according to any of claims 1 to 4, **characterized by** the fact that said UV absorber is selected from the group consisting of benzotriazoles, especially hydroxyphenylbenzotriazole; triazines such as hydroxyphenyl-S-triazine; hydroxybenzophenones; and oxalic anilides.

6. The method according to Claim 5, **characterized by** the fact that said UV absorber is 2,2'-dihydroxy-4-methoxybenzophenone.

7. The method according to any of claims 1 to 6, **characterized by** the fact that the dispersing agent is dodecylbenzenesulphonic acid.

8. The method according to any of claims 1 to 7, **characterized by** the fact that the immersion time of the optical article in the solution containing the UV absorber is about 30 seconds.

9. The method according to any of claims 1 to 8, **characterized by** the fact that the temperature of the immersion bath is between 90°C and 96°C.

10. The method according to Claim 9, **characterized by** the fact that the temperature of the immersion bath is equal to 94°C.

11. The method according to any of claims 1 to 10, **characterized by** the fact that the optical article further comprises one or more coatings selected from the group consisting of an abrasion-resistant coating, for example a bilayer coating optionally applied to a primer layer; a tinted coating; an oxygen barrier coating; an anti-reflection coating; a hydrophobic and oleophobic anti-soiling coating; and an anti-static coating.

12. An optical article obtainable according to the method defined in any one of Claims 1 to 11.

## Patentansprüche

1. Verfahren zur Herstellung eines polarisierten optischen Artikels, insbesondere einer polarisierten ophthalmischen Linse, umfassend mindestens die aufeinanderfolgenden Schritte, jeweils bestehend aus:
- dem Aufbringen auf ein Substrat des optischen Artikels einer polymerisierten Beschichtung, die mindestens einen Farbstoff umfasst, der empfindlich gegenüber Photoabbau ist, und
- dem Einführen eines UV-Absorbers in die Beschichtung, **dadurch gekennzeichnet, dass**
(a) die polymerisierte Beschichtung, die mindestens einen Farbstoff umfasst, der empfindlich gegenüber Photoabbau ist, eine zweischichtige Beschichtung ist, umfassend eine erste Schicht aus linearen Photopolymeren (LPP) und eine zweite Schicht aus flüssigkristallinen Polymeren (LCP), umfassend mindestens einen dichroitischen Farbstoff, und
(b) der UV-Absorber mittels Imbibition in die Beschichtung eingeführt wird, wobei die Imbibition die folgenden Schritte umfasst:
(b1) Eintauchen des Artikels in eine wässrige Lösung, die den UV-Absorber und mindestens ein Dispergiermittel umfasst, während einer Dauer von zwischen 10 Sekunden und 2 Minuten, wobei die Lösung bei einer Temperatur zwischen 80°C und 99°C gehalten wird, dann
(b2) Spülen des Artikels mit einem niederen Alkohol.

2. Verfahren gemäß Anspruch 1, **dadurch gekennzeichnet, dass** das Substrat ausgewählt ist aus: Substraten vom Polycarbonat-Typ; Polyamid; Polyimiden; Polysulfonen; Poly(ethylenterephtalat)/Polycarbonat-Copolymeren; Polyolefinen, insbesondere Polynorbornenen; Diethylenglycol-bis(allylcarbonat)-Polymeren und -Copolymeren; (Meth)acryl-Polymeren und - Copolymeren, insbesondere von Bisphenol A abgeleiteten (Meth)acryl-Polymeren und -Copolymeren; Thio(meth)acrylPolymeren und -Copolymeren; Urethan- und Thiourethan-Polymeren und -Copolymeren; Epoxy-Polymeren und -Copolymeren und Episulfid-Polymeren und -Copolymeren.

3. Verfahren gemäß Anspruch 2, wobei das Substrat ein Poly(thio)urethan ist.

4. Verfahren gemäß einem der Ansprüche 1 bis 3, **dadurch gekennzeichnet, dass** das Aufbringen der zweischichtigen Beschichtung gemäß einem Verfahren durchgeführt wird, umfassend die aufeinanderfolgenden allgemeinen Schritte, bestehend aus:
1- Herstellen einer Lösung mindestens eines linearen Photopolymers,
2- Aufbringen der Lösung auf das Substrat, um eine Photoalignment-Schicht zu bilden,
3- Anwenden von UV-Strahlung in Anwesenheit eines Polarisators auf die Photoalignment-Schicht, um sie zu strukturieren,
4- Herstellen einer Flüssigkristall-Lösung, die mindestens einen dichroitischen Farbstoff enthält,
5- Aufbringen der Lösung auf die strukturierte Photoalignment-Schicht,
6- Vernetzen der Flüssigkristall-Schicht mittels einer UV-Lichtquelle.

5. Verfahren gemäß einem der Ansprüche 1 bis 4, **dadurch gekennzeichnet, dass** der UV-Absorber ausgewählt ist aus:
Benzotriazolen, insbesondere Hydroxyphenylbenzotriazol; Triazinen, wie z. B. Hydroxyphenyl-S-triazin; Hydroxy-benzophenonen; und Oxalaniliden.

6. Verfahren gemäß Anspruch 5, **dadurch gekennzeichnet, dass** der UV-Absorber 2,2'-Dihydroxy-4-methoxybenzophenon ist.

7. Verfahren gemäß einem der Ansprüche 1 bis 6, **dadurch gekennzeichnet, dass** das Dispergiermittel Dodecylbenzolsulfonsäure ist.

8. Verfahren gemäß einem der Ansprüche 1 bis 7, **dadurch gekennzeichnet, dass** die Dauer des Eintauchens des optischen Artikels in die Lösung, die den UV-Absorber enthält, ungefähr 30 Sekunden ist.

9. Verfahren gemäß einem der Ansprüche 1 bis 8, **dadurch gekennzeichnet, dass** die Temperatur des Tauchbads zwischen 90°C und 96°C liegt.

10. Verfahren gemäß Anspruch 8, **dadurch gekennzeichnet, dass** die Temperatur des Tauchbads gleich 94°C ist.

11. Verfahren gemäß einem der Ansprüche 1 bis 10, **dadurch gekennzeichnet, dass** der optische Artikel eine oder mehrere Schichten umfasst, ausgewählt aus: einer abriebfesten Beschichtung, zum Beispiel vom zweischichtigen Typ, die gegebenenfalls auf eine Primerschicht aufgebracht wird; einer gefärbten Schicht; einer Sauerstoffsperrschicht; einer Antireflexschicht, zum Beispiel vierschichtig; einer hydrophoben und oleophoben schmutzabweisenden Beschichtung; und einer antistatischen Beschichtung.

12. Optischer Artikel, erhältlich gemäß dem in einem der Ansprüche 1 bis 11 definierten Verfahren.
